Europäisches Patentamt

European Patent Office

Office européen des brevets

(19)

(11) **EP 1 220 175 A2**

(12) **EUROPEAN PATENT APPLICATION**

(43) Date of publication:
**03.07.2002 Bulletin 2002/27**

(51) Int Cl.[7]: **G07F 19/00**, G06F 17/60

(21) Application number: **01130684.2**

(22) Date of filing: **21.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.12.2000 JP 2000401642**

(71) Applicant: **Tokai Bank, Ltd.**
**Nagoya-shi, Aichi-ken (JP)**

(72) Inventors:
- **Nakajima, Yoshiaki, c/o Tokai Bank, Ltd.**
  **Nagoya-shi, Aichi-ken (JP)**
- **Ogawa, Naoya, c/o Tokai Bank, Ltd.**
  **Nagoya-shi, Aichi-ken (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Electronic transaction system**

(57)     When the server receives conditions of a transaction offer from one of the client computers, it determines credibility of the client who placed the transaction offer based on the credit limit of the client. If the client is found credible, the transaction offer is entered provided that there is no identical transaction with more advantageous conditions. Thereafter, the transaction offer is placed on the electronic bulletin board as an offer made by the bank (server administrator) and not by the client.

FIG. 1

(CLIENT)        (BANK)

**EP 1 220 175 A2**

**Description**

FIELD OF THE INVENTION

This invention relates to an electronic transaction system in which electronic transactions are conducted using a server connected with client computers through a network.

BACKGROUND OF THE INVENTION

It is known in the art that there is a system where clients can place their transaction needs through the Internet and which intermediates between selling parties and buying parties, such as in auction sites and "name-your-price" auction sites.

However, such a system has been a cause of trouble. Since each transaction is executed only between the parties concerned, without an intermediary, it is not easy for the clients to identify their trading partner or to determine whether the credit standing of the trading partner and the trading goods actually match the prearranged conditions.

SUMMAEY OF THE INVENTION

An object of the present invention is to provide an electronic transaction system in which desired transactions can be securely executed.

In order to attain the above object, an electronic transaction system of the present invention comprises a server connected with client computers through a network, and the server, when receiving a transaction offer from one of the client computers, determines the client's credibility, and if the client is found credible, places the transaction offer on its electronic bulletin board as a transaction offer made by itself, and not by the client.

The present invention can be utilized as follows. A client views the electronic bulletin board of this server to search for a transaction offer which satisfies his/her needs. When there is no match for the client's needs on the server's electronic bulletin board, although there are specific transaction needs, the client submits a transaction offer on the server's electronic bulletin board from his/her own computer. The server, when it receives conditions of a new transaction offer from the client's computer, determines credibility of the client who submitted the transaction offer and, if the client is found credible, posts the transaction offer on the electronic bulletin board as an offer made by the server administrator and not by the client.

According to the present invention, since the server posts a transaction offer made by the client on its electronic bulletin board as a transaction offer made by the server administrator as if the client is given credit from the server administrator, other clients who wish to accept the transaction offer can feel secure about carrying out the transaction.

In the electronic transaction system of the present invention, it is preferable that the server, when it receives acceptance of the transaction offer from one of the client computers, determines credibility of the client who made the acceptance, and if the client is found credible, permits the execution of the transaction. Since the server allows the transaction to be executed only when the client who accepts the transaction offer is found credible, occurrence of trouble can be prevented. In addition, the server administrator may act as a counter party (intermediary) between the client who places the transaction offer and'the client who accepts the transaction offer, so that both clients who wish the transaction to be carried out can always recognize their trading partner as the server administrator and feel secure about undertaking the transaction. In this case, the server may conduct operations relating to the transaction with the computers of both clients.

In the electronic transaction system of the present invention, it is preferable that the server determines that the client is credible on condition that the client's gross credit amount, including a credit amount of the new transaction offer, is within the predetermined credit limit of the client. Credit limit here means a maximum credit amount determined according to a credit standing of each client. When a client places a new transaction offer, it is posted on the electronic bulletin board as a transaction offer made by the server administrator and not by the client. Therefore, it is also necessary for the server administrator to check the client's suitability for getting involved in the transaction according to the client's credibility. One way to determine the suitability is to check whether the client's gross credit amount exceeds the credit limit of the client. The credit limit is determined by a credit check. Therefore, one can make a transaction securely with the other whose gross credit amount is within the credit limit.

It is preferable that the gross credit amount is the total of the credit amount of the client's new transaction offer, the credit amount of the client's transaction offers which have already been on the electronic bulletin board, and the credit amount of the balance of the transactions which have been agreed but the credit transaction period of which has not yet been expired.

In the electronic transaction system of the present invention, the server determines whether there is another transaction offer posted on the electronic bulletin board whose conditions are identical to those of the newly received transaction offer except for the price. It is preferable that if such a transaction offer has been posted already, one of the transaction offers which is more advantageously priced for a trading partner should be given priority in posting. In this manner, since a profit of the trading partner is the first consideration, stimulation of transaction activities is likely enhanced.

In case there is an identical transaction offer on the electronic bulletin board whose conditions are identical to those of the newly received transaction offer except for the price, it is preferable that if the former transaction offer which has been posted is more advantageously priced, the server refrains from placing the newly received transaction offer, and to the contrary, if the newly received transaction offer is more advantageously priced, the server replaces the former transaction offer with the new one and notifies the client who placed the former transaction offer that his/ her transaction offer has been removed from the electronic bulletin board. In this manner, the client may not be puzzled to find that his/her transaction offer has disappeared from the electronic bulletin board. If the newly received transaction offer is less advantageously priced, the server notifies the client, who submitted the transaction offer, that his/her transaction offer is unable to be posted for there has been a more advantageous transaction offer.

In the electronic transaction system of the present invention, it is preferable that the server is capable of posting transaction offers made by the server administrator on the electronic bulletin board. In this manner, a wide variety of transaction offers on the electronic bulletin board can be realized.

It is preferable that the server of the electronic transaction system is managed by a bank. In this case, transaction offers on the electronic bulletin board are regarded as those made by the bank. Since banks generally enjoy the full confidence of the clients, the clients can participate in the transactions at ease. Particularly, if the bank. acts as a counter party (intermediary) between the client who places a transaction offer and a client who accepts the transaction offer, both clients can recognize the bank as their trading partner and would feel secure about trading.

In the electronic transaction system of the present invention, any goods and services, preferably credit derivative, can be traded. Credit derivative enables transfer of credit risk, inherent in financial products, such as loans and securities by determining and extracting the credit risk from the original assets. The electronic transaction system of the present invention is suitable for credit derivative transactions, and thus helps to expand a credit derivative market.

Now let us explain a specific example of credit derivative. For instance, a company A has a claim against a company B. However, if an event (which may cause a loss of credit of the company B, such as bankruptcy and default on payment) occurs, the company A may have to suffer from a bad loan. In order to avoid such a risk, the company A may look for a party who will repay the principal for the loan, provided the company A pays a premium (option fee) to the party. In other words, the company A wishes to buy protection through payment of a premium. If the company A pays the premium in a lump sum, the credit amount of the company A equals to zero, and if it pays the premium in installments, the credit amount is calculated based on the total amount of the premium to be paid.

On the other hand, when a company C has confidence that no liability event occurs to a company D, the company C may wish to receive a premium provided that the company C will repay the principal for a loan to a party who has a claim against the company D, in case of a liability event, in order to raise investment yields. In other words, the company C wishes to sell protection through receipt of a premium. Since the company C, upon the liability event of the company D, has to pay the principal for the loan of the company D, the credit amount of the company C is calculated depending on the amount of the principal, the transaction period, and the credit rating of the company D.

BRIEF DESCRIPTION OF THE DRAWING FIGURES

The invention will now be described, by way of example, with reference to the accompanying drawing, in which:

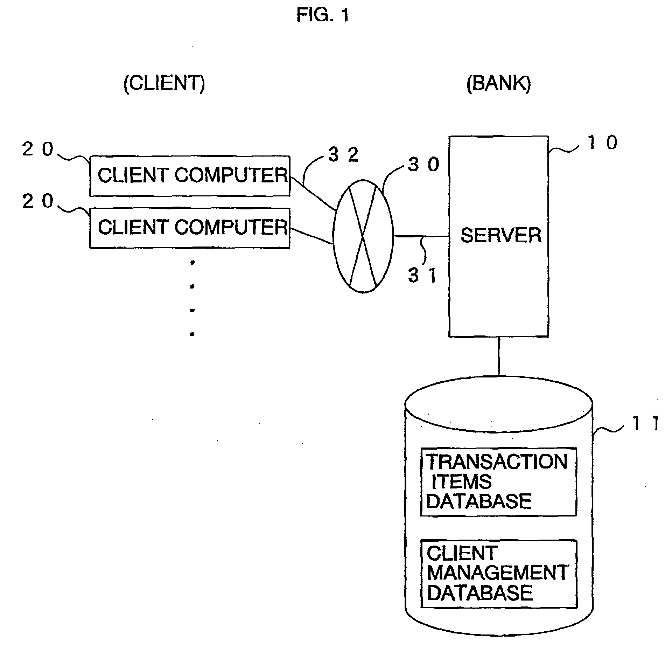

Fig. 1 is a schematic diagram illustrating a configuration of devices of the present embodiment;

Fig. 2 is a flowchart of a transaction control program;

Fig. 3 is an explanatory view showing a top page screen of web pages for the exclusive use of members;

Fig. 4 is a flowchart of a posting routine;

Fig. 5 is an explanatory view showing a display screen of "Today's Price Indications" (electronic bulletin board);

Fig. 6 is an explanatory view showing a transaction details screen;

Fig. 7 is an explanatory view of credit derivative (default swap);

Fig. 8 is a flowchart of a check routine;

Fig. 9 is an explanatory view showing a display screen of "Your Deals Currently Posted"; and

Fig. 10 is an explanatory view showing a conditions input screen.

DETAILED DESCRIPTION OF THE INVENTION

The present embodiment comprises a server 10 managed by a bank, computers 20 managed by the clients of the bank, and the Internet 30 through which the server 10 and respective client computers 20 are connected.

The server 10 is connected with the Internet 30 via a transmission line 31. This server 10, through the Internet 30, outputs contents of its electronic bulletin board from a transaction items database in a storage device 11 to the client computers 20, reads client information from a client management database in the storage device 11 to execute various processes, stores and updates the client information to the client management database and executes various processes based on information received from the client computers 20.

The client computers 20 are connected with the Internet 30 via a transmission line 32 for a dial up access to Internet providers. The clients who manage the client computers 20 are respectively given a password and user ID for viewing the bank's web pages for the exclusive use of members from the bank which manages the server 10.

Now, how a client utilizes the web pages of the bank (server administrator) is described. The client, after obtaining a password and user ID from the bank (server administrator), accesses the bank's web pages for the exclusive use of members by inputting the password and user ID. The client views each of the transaction offers posted on the electronic bulletin board of the bank to see if there is a transaction offer which satisfies his/her own needs. If there is a desired transaction which satisfies the needs, the client accepts the transaction on the web page. On the other hand, if there is no transaction offer which matches the needs, the client places a new transaction offer on the electronic bulletin board. However, if the gross credit amount of the client including the credit amount of the new transaction offer exceeds the credit limit of the client at the time when accepting or placing the new transaction offer, the acceptance or placement is rejected due to lack of credibility of the client. On the electronic bulletin board, the bank's name instead of the client's name is displayed as if the bank (server administrator) accepted or placed the transaction offer.

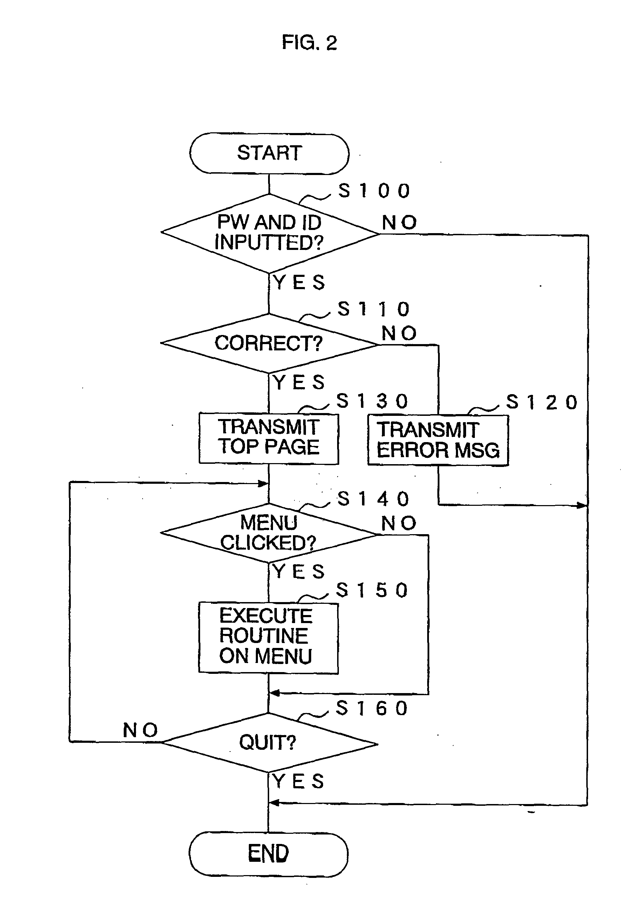

The details of how the client uses the bank's web pages will be described with reference to a flowchart of a transaction control program shown in Fig. 2. Transactions concerning credit derivative are also explained.

The server 10 reads the transaction control program at a predetermined timing for execution. The server 10, in step S 100, determines whether it received a password and user ID from one of the client computers 20, that is, whether a password and user ID are inputted on one of the client computers 20. If not (S100 is NO), it exits from this program.

If a password and user ID are received (S100 is YES), it determines whether the password and user ID are correct (S110). Passwords and user IDs are stored beforehand per each client in the client management database in the server 10 and accordingly, the correctness of the received password and user ID is determined by checking whether they are stored or not in the client management database. If the password and user ID are not correct (S110 is NO), the server 10 transmits a message "Incorrect password and/or user ID", for example, to the client computer 20 (S120) and exits from this program. The error message is then shown on the display of the client computer 20, so that the client may notice the mistake upon the input. The message can be sent by sound data instead of text data.

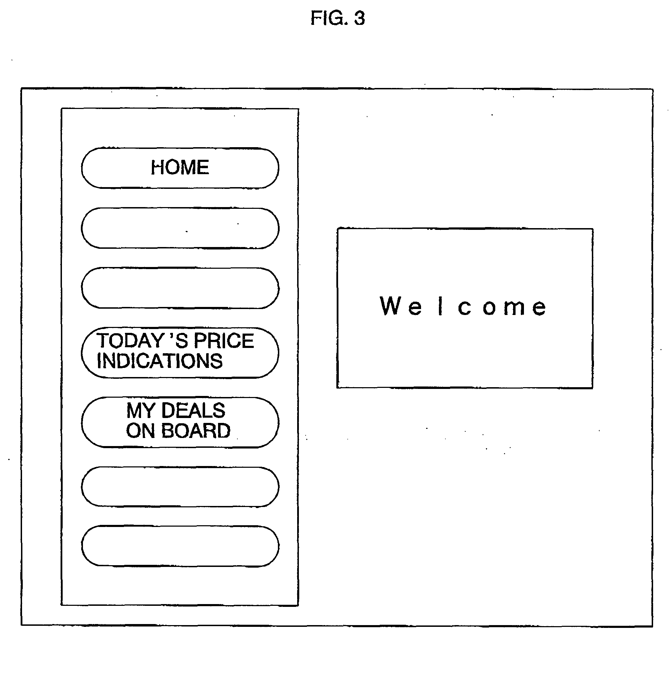

If the password and user ID are correct (S110 is YES), the server 10 transmits a top page of the web pages for the exclusive use of members to the client computer 20 (S130). The top page, illustrated in Fig. 3, is then shown on the display of the client computer 20. A menu showing items like "Today's Price Indications", "My Deals on Board" and so on, is displayed on the top page. The server 10 determines whether one of the items on the menu is selected by the client computer 20, that is, there is a click on one of the items on the menu on the client computer 20 (S140). If no item is selected (S140 is NO), the server 10 proceeds to S160. On the other hand, if any item on the menu is selected (S140 is YES), the server 10 executes a routine according to the selected item (S150) and then proceeds to S160 to determine whether a quit signal is transmitted, that is whether there is a click on a Quit button (not shown). If the quit signal is not transmitted (S160 is NO), the server 10 returns to S140 and, if the quit signal is transmitted (S160 is YES), the server 10 exits from this program.

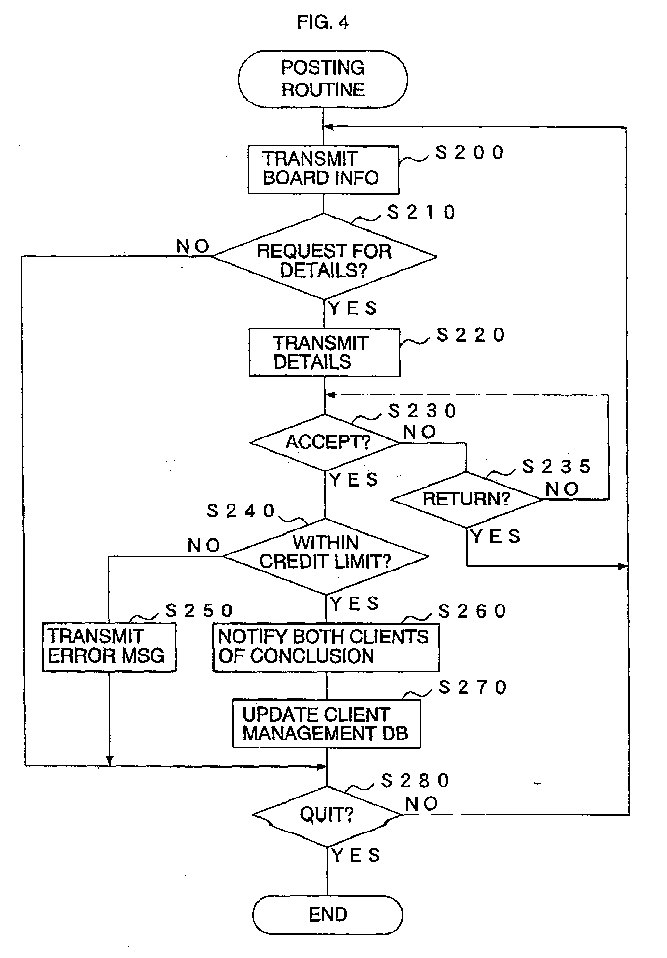

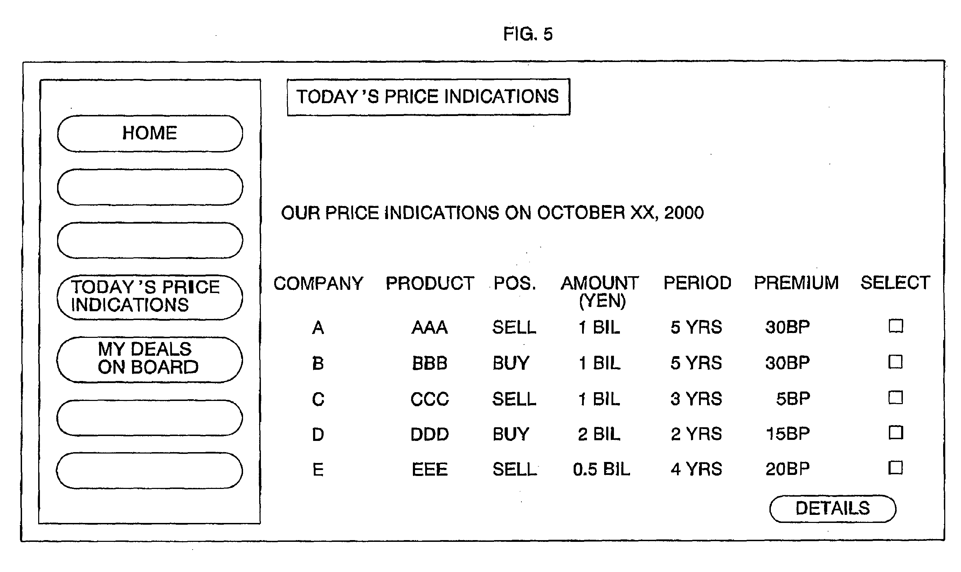

Subsequently, a posting routine, executed when the item "Today's Price Indications" on the menu of the top page is clicked, is described with reference to a flowchart of Fig.4. When this routine is started, the server 10 transmits information on the electronic bulletin board to the client computer 20 (S200). Then the electronic bulletin board as shown in Fig. 5, for example, is shown on the display of the client computer 20. On this electronic bulletin board, there is a description like "Our price Indications on October XX, 2000" indicating, for example, a product "AAA" of company "A", as a sell offer. All these transaction offers are posted as transactions placed by the bank (server administrator).

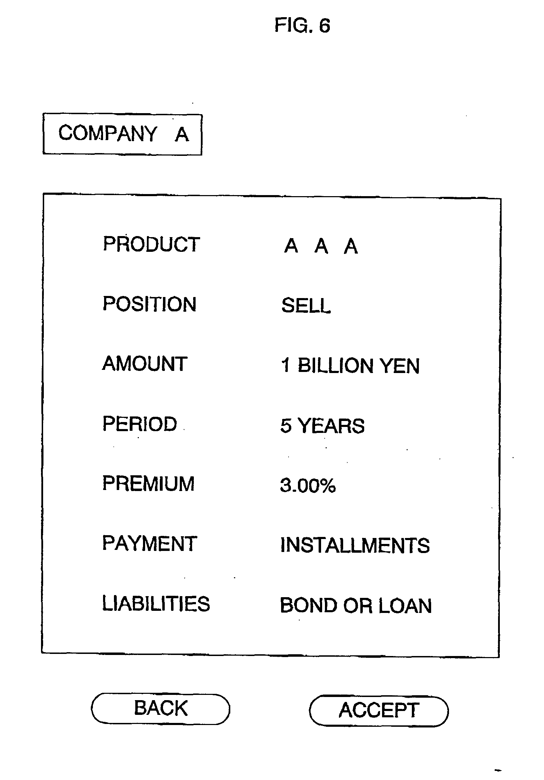

The server 10 then determines whether there is a request for transaction details from the client computer 20, that is, whether there is a click on a button "Details" with a selection box of the target transaction on the electronic bulletin board of Fig. 5 checked on the client computer 20 (S210). If negatively determined (S210 is NO), the server 10 proceeds to S280. On the other hand, if positively determined (S210 is YES), the server 10 reads transaction details of the requested transaction from the transaction items database and transmits the contents of the transaction to the client computer 20 (S220). If the button "Details" is clicked with the selection box of, for example, the product "AAA" of company "A" checked off, the transaction details, as illustrated in Fig. 6, are shown on the display of the client computer 20.

The server 10 then determines whether there is acceptance of the transaction offer from the client computer 20, that is, whether there is a click on a button "Accept" located in the margin of the transaction details of Fig. 6 on the client computer 20 (S230). If there is no acceptance (S230 is NO), it determines whether there is a request to return to the previous screen (S235) and, if there is no request to return (S235 is NO), repeats S230 and onward again and, if there is a request to return (S235 is YES), returns to S200. On the other hand, if there is acceptance of the transaction offer (S230 is YES), it determines whether the gross credit amount of the accepting client, including the credit amount of the new transaction offer, is within the predetermined credit limit(S240).

In particular, the server 10 reads the credit amount of the transaction offers which the client currently posts on the electronic bulletin board (credit amount of written transaction offers), the credit amount of the balance of the transactions of the client which have been agreed but the credit transaction period of which has not yet expired (credit amount of past transaction balance), and the credit limit of the client. The server 10 then determines whether the amount of the former two plus the credit amount of the new transaction offer, that is, the gross credit amount of the client, is within the credit limit of the client. In short, it determines whether the following Equation 1 is satisfied or not.

## EQUATION 1.

$$\left. \begin{array}{c} \text{new transaction credit} \\ + \\ \text{written transaction credit} \\ + \\ \text{past transaction balance credit} \end{array} \right\} \text{(gross credit)} \leqq \text{credit limit}$$

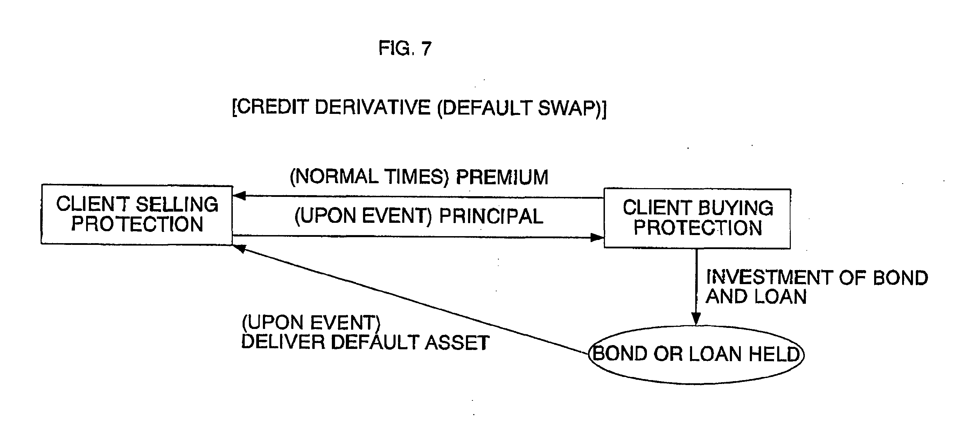

There is a variety of ways to calculate the credit amount. Here, we explain an example of default swap of credit derivative with reference to Fig. 7. In default swap, there are two cases in which a client buys protection and sells protection. When buying protection, the client pays a premium to a trading partner at normal times on condition that the trading partner should guarantee repayment of the principal for the loan held by the client. Accordingly, the client's capacity to pay the premium is a question to be solved. When the premium is paid in a lump sum, the payment is completed at the time of the agreement and the credit amount equals to zero. On the other hand, when the premium is paid in installments, the payment continues after the agreement and thus, the credit amount is calculated based on the total amount of the premium to be paid throughout the transaction period.

When selling protection, the client guarantees repayment of the principal for the loan held by a trading partner. The client is required to pay the principal for the loan to the trading partner in case of an event (when bankruptcy or default on payment occurs to the company which issued the loan) on condition that the loan should be delivered to the client as a default asset. Accordingly, the client's capacity to pay for the principal is a question to be solved. In this case, a risk rate is determined based on a credit rating of the issuer of the loan evaluated by external rating agencies as well as the transaction period and then the credit amount of the client is calculated considering the amount of the principal and the risk rate. The higher the rating is and the shorter the transaction period is, the lower the risk rate is.

Credit limit is determined based on a credit standing and a transaction scale of each client. There are various ways to calculate the credit limit. For instance, in order to determine a credit standing of a client, ratings by external credit rating agencies can be referred to.

In S240, if the gross credit amount of the client is not within the credit limit of the client (S240 is NO), an error message (such as "Unable to accept transaction offer due to exceeded credit limit") is sent to the client computer 20 and then the server 10 proceeds to S280. Since the error message is displayed on the display of the client computer 20, the client can acknowledge why the client could not accept the transaction offer. On the other hand, if the gross credit amount is within the credit limit of the client (S240 is YES), that is, the above Equation 1 is satisfied, the server 10 notifies both of the clients who accepted the transaction offer and the client who placed the transaction offer that the transaction is concluded (S260), updates both clients' data in the client management database, respectively (S270), and proceeds to S280. In S280, it determines whether a quit signal is transmitted from the client computer 20, that is, there is a click on a Quit button (not shown). If the quit signal is not transmitted (S280 is NO), the server 10 returns to S200, and if the quit signal is transmitted (S280 is YES), exits from this routine after sending the top page to the client computer 20.

Here, the details relating to the data update in S270 are explained. The credit amount of the past transaction balance is updated for the client who accepts the transaction offer. That is, if the client buys protection, the credit amount is updated to an amount to which a credit amount calculated on the basis of the premium to be paid throughout the transaction period is added and, if the client sells protection, it is updated to an amount to which a credit calculated with the principal for the loan and the risk rate considered. On the other hand, the credit amount of the past transaction balance and the credit amount of written transaction offers are updated for the client who places the transaction offer. That is, the credit amount of the newly agreed transaction, out of the credit amount of written transaction offers, is transferred to the credit amount of the past transaction balance.

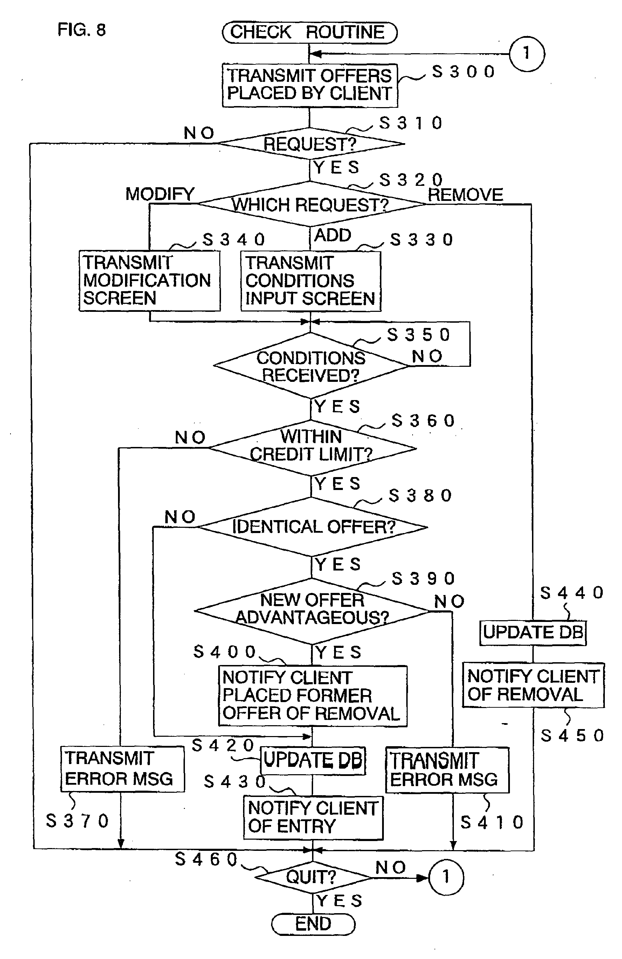

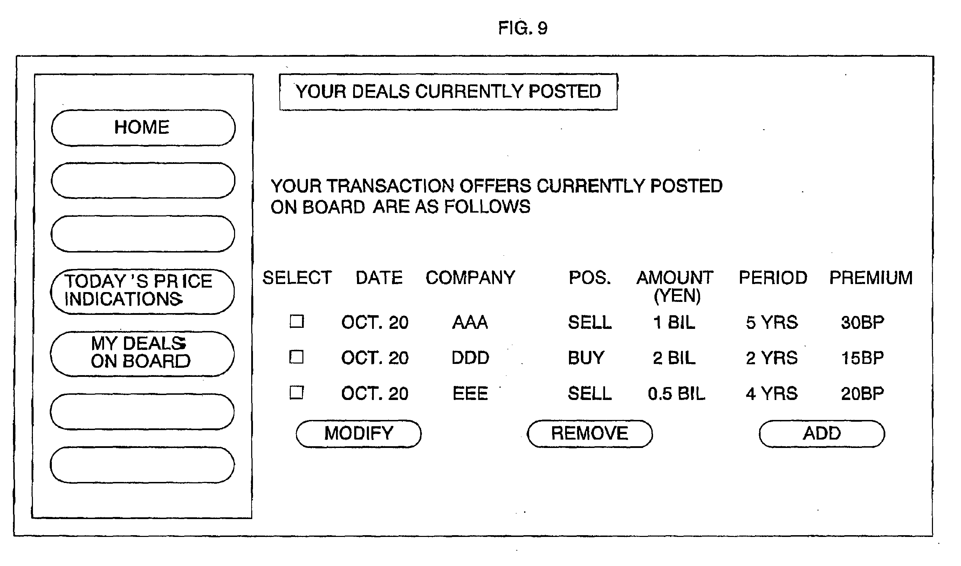

A check routine, executed when the item "My Deals on Board" on the menu of the top page is clicked, is now explained with reference to a flowchart of Fig. 8. When the client wishes to check or modify the transaction offers currently posted by the client on the electronic bulletin board, the item "My Deals on Board" is clicked. The server 10, when this routine is started, transmits the client's transaction offers currently posted on the electronic bulletin board to the client computer 20 (S300). Then, a list of "Your deals currently posted" as shown in Fig. 9, for example, is shown on the display of the client computer 20. In this list, there is a description "Your transaction offers currently posted on board are as follows", and a product "AAA" of company "A" is posted as a sell offer, and two other offers are also posted, for example. At the bottom of the screen, there are buttons "Modify", "Remove" and "Add".

The server 10 determines which action is requested from the client computer 20, that is, which button among the buttons "Modify", "Remove" and "Add" is clicked on the client computer 20 (S310). If none is requested (S310 is NO), the server 10 proceeds to S460. If any action is requested, it determines which action is requested (S320).

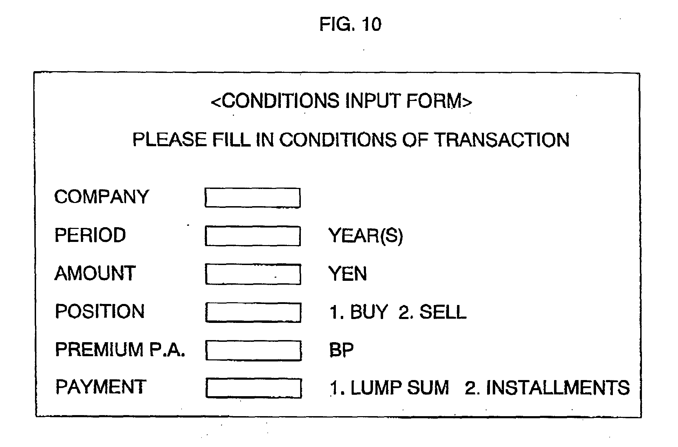

If the action "Add" is requested in S320, the server 10 transmits a screen (conditions input screen) for inputting conditions of a new transaction offer to the client computer 20 (S330). On the display of the client computer 20, the conditions input screen of Fig. 10 is displayed. The server 10 then determines whether it received conditions of a new transaction offer from the client computer 20, that is, whether the client filled in respective text box fields on the conditions input screen of Fig. 10 and clicked on the Submit button (S350). If negatively determined (S350 is NO), the server 10 remains standing by, and if positively determined (S350 is YES), it determines whether the gross credit amount of the client, including the credit amount of the new transaction offer, is within the predetermined credit limit of the client (S360). In particular, as in S240 of the aforementioned posting routine, it is determined whether the above Equation 1 is satisfied or not. The way of calculating the credit amount of the newly entered transaction offer is the same as that in the aforementioned posting routine. If the client buys protection for the new transaction, the credit amount is calculated according to the premium to be paid throughout the transaction period and, if the client sells protection for the new transaction, it is calculated with the principal for the loan and the risk rate considered,

In S360, if the gross credit amount of the client is not within the credit limit of the client (S360 is NO), an error message (such as "Unable to place transaction offer due to exceeded credit limit") is sent to the client computer 20 (S370), and the server proceeds to S460. Since the error message is shown on the display of the client computer 20 by S370, the client acknowledges that the placement has failed. If the gross credit amount of the client is within the credit limit of the client (S360 is YES), the server 10 proceeds to S380.

In S380, it is determined if there is another transaction offer posted on the electronic bulletin board whose conditions are identical to those of the new transaction offer except for the premium. If there is no such transaction offer (S380 is NO), the server 10 adds the new transaction offer to the transaction items database as well as updates the client's data in the client management database (S420), sends a notice of entry of the new transaction offer to the client computer 20 (S430), and proceeds to S460. Since then, when the item "Today's Price Indications" is selected on one of the client computers 20, the new transaction offer is shown on the electronic bulletin board. In S420, the written credit amount of the client is updated to an amount including the credit amount of the new transaction offer in the client management database.

On the other hand, if there is another transaction offer posted on the electronic bulletin board whose conditions are identical to those of the new transaction offer except for the premium (S380 is YES), the server 10 determines whether the new transaction offer is more advantageous to a trading partner (S390). In particular, if the . client wishes to buy protection, it is more advantageous to a trading partner (i.e. party that sells protection) that the premium is high. If the client wishes to sell protection, then it is more advantageous to a trading partner (i.e. party that buys protection) that the premium is low.

If the newly received transaction offer is less advantageous to a trading partner (S390 is NO), the server 10 sends an error message (such as "Unable to place transaction offer due to presence of identical transaction with better conditions") to the client computer 20 who submitted the new transaction offer, and then proceeds to S460. Since the error message is shown on the display of the client computer 20 by S410, the client acknowledges why his/her offer has been rejected. On the other hand, if the new transaction offer is more advantageous to a trading partner (S390 is YES), the server 10 sends an error message (such as "Your transaction offer has been removed due to presence of identical transaction with better conditions") to the client computer 20 from which the client formerly has placed the transaction offer (S400), and then proceeds to S420 and onward.

Returning to S320, if the action "Modify" is requested, the server 10 transmits a screen (conditions modification screen) including the conditions of the selected transaction offer (i.e. transaction offer whose selection box of Fig. 9 is checked) to the client computer 20 (S340). Here, a screen similar to that of Fig. 10, that is, a screen of Fig. 10 in which respective text box fields have been filled out, is shown on the display of the client computer 20. In the following S350, the server 10 determines whether the modified conditions of the transaction offer are received from the client computer 20, that is, whether the "Submit" button is clicked after the contents in the text box fields to be modified have been overwritten, and then executes the aforementioned processes of S360 and onward.

If the action "Remove" is requested in S320, the server 10 removes the selected transaction offer from the transaction items database and updates the written credit amount of the client in the client management database by subtracting the credit amount of the removed transaction offer from it (S440). The server 10 notifies the client computer 20 of the completion of removal of the selected transaction offer (S450) and then proceeds to S460.

Lastly, in S460, the server 10 determines whether a quit signal is transmitted from the client computer 20, that is, whether a "Quit" button (not shown) is clicked. If a quit signal is not transmitted (S460 is NO), the server 10 returns to S300 and, if a quit signal is transmitted (S460 is YES), exits this routine after transmitting the top page to the client computer 20.

A specific example of the present embodiment is now explained. When a client inputs the correct password and user ID on the client computer 20, the server 10 transmits the top page of web pages for the exclusive use of members to the client computer 20 (S100-S130). The top page, shown in Fig. 3, is shown on the display of the client computer 20. When the client clicks on the item "Today's Price Indications" on the menu, the server 10 executes the posting routine of Fig. 4 and sends the information on the electronic bulletin board to the client computer 20 (S200). When the electronic bulletin board of Fig. 5 appears on the display. of the client computer 20, the client views respective transaction offers posted on the electronic bulletin board and searches for a transaction offer which satisfies his/her needs.

When there is no match on the electronic bulletin board of the server 10, although there are specific transaction needs, the client performs an operation to quit displaying the electronic bulletin board. The server 10 then transmits the top page to the client computer 20, and exits from the posting routine. When the client clicks on the item "My Deals on Board" on the menu, the server 10 executes the check routine of Fig. 8 and transmits the transaction offers posted by the client (S300). The screen of Fig. 9 appears on the client computer 20. The client clicks on the button "Add" and, to the conditions input screen of Fig. 10 which thereby appears, inputs conditions of a transaction offer. When the client clicks on the button "Submit", the server 10 determines whether the gross credit amount of the client, including the new transaction offer, is within the credit limit of the client (S360). If the gross credit amount is not within the credit limit, the server 10 transmits an error message (S370), otherwise the transaction offer is entered unless there is already an identical transaction offer with better conditions (S380-S430) and thereafter, the transaction offer is posted as a transaction offer posted by the bank on the electronic bulletin board. In other words, the server 10 when receiving a new transaction offer from the client computer 20 determines credibility of the client who submitted the transaction offer based on the credit limit of the client and, if the client is found credible, posts the transaction offer as an offer made by the bank (server administrator) and not by the client on the electronic bulletin board.

On the other hand, if there is a transaction offer which matches the specific transaction needs of the client, the client requests for details of the transaction offer, views the transaction details as shown in Fig. 6, and clicks on the button "Accept". The server 10 determines whether the gross credit amount of the client including the new transaction offer is within the credit limit of the client (S240). If the gross credit amount is not within the credit limit, the server sends an error message (S250) and, if it is within the limit, the bank (server administrator) acts as an intermediary and executes the transaction. In other words, the server 10 when receiving acceptance from the client computer 20 determines credibility of the client who made the acceptance, and if the client is found credible, the bank (server administrator) acts as an intermediary and executes the transaction.

From the above described embodiment, the following effects should be obtained.

Since the server administrator posts transaction offers made by a client as those made by the server administrator on the electronic bulletin board as if the client is given credit by the bank (server administrator), other clients who wish to accept the transaction offers can have confidence in the execution of the transaction.

Secondly, occurrence of trouble can be prevented since the transaction is approved only when the client who makes acceptance is found credible.

Thirdly, since the bank (server administrator) acts as a counter party (intermediary) of both clients who places the transaction offer and who accepts the transaction offer, the clients who desire to trade can confirm that their trading partner is the bank and securely carry out the transaction.

Fourthly, because credibility of a client is determined by the credit limit which is defined based on a credit check, the transaction can be securely executed as long as the gross credit amount of the client is within the credit limit.

Lastly, in case there is a transaction offer whose conditions are identical to those of a newly entered transaction offer, except for the premium, the server selects and posts one of the transaction offers more advantageous to a trading partner, so that a profit of the trading partner is given precedence and trading can be activated. When the transaction offer which has been placed is removed, the client who placed the transaction offer is notified of removal, so that the client should not be puzzled.

The present invention is not limited to the above embodiment, and other modifications and variations are possible within the technical scope of the present invention.

For instance, in the above embodiment, the server 10 may be capable of posting transaction offers made by the bank (server administrator) itself on the electronic bulletin board. In this manner, a wide selection of transaction offers is attained on the electronic bulletin board.

The above embodiment describes trading of credit derivative. However, the present invention can be applied to any other goods and services that are capable of being traded.

Furthermore, although the above embodiment describes the case that a bank is the server administrator, the server administrator can be any corporate_body or individual. For the secure execution of transactions, however, it is preferable that the server administrator is a highly reliable body, such as a listed company.

In the posting routine, the processes from S230 to S270 can be omitted so that the server proceeds directly to S280 after the process of S220. In this case, the client who wishes to accept the transaction offer may make the acceptance via telephone or facsimile. When receiving acceptance, the server administrator executes the processes including those of S230-S270.

A client may be able to jump to a web site of a company when clicking on any of the company names on the electronic bulletin board of Fig. 5. In this manner, the client can obtain detailed information of the company and use them as criteria for determining acceptance. Moreover, upon updating each database, it is possible to allow links automatically to web sites of the companies in the flowchart of Fig. 8.

When the server receives conditions of a transaction offer from one of the client computers, it determines credibility of the client who placed the transaction offer based on the credit limit of the client. If the client is found credible, the transaction offer is entered provided that there is no identical transaction with more advantageous conditions. Thereafter, the transaction offer is placed on the electronic bulletin board as an offer made by the bank (server administrator) and not by the client.

## Claims

1. An electronic transaction system comprising:

   a server connected with client computers through a network; and wherein the server upon receiving conditions of a new transaction offer from one of the client computers, determines credibility of the offering client, and if the offering client is found credible, places the new transaction offer on an electronic bulletin board as a host transaction offer, and not a transaction offer by the offering client.

2. The electronic transaction system as set forth in claim 1, wherein the server, upon receiving acceptance of the host transaction offer posted on the electronic bulletin board from an accepting client through any one of the client computers, determines credibility of the accepting client and if the accepting client is found credible, permits the execution of the transaction.

3. The electronic transaction system as set forth in claim 1, wherein the server upon checking credibility of the offering client determines whether a gross credit amount of the offering client, including a credit amount of the new transaction offer is within a predetermined credit limit of the client, and if the gross credit amount is within the predetermined credit limit, determines that the client is credible.

4. The electronic transaction system as set forth in claim 3 wherein the gross credit amount is a sum of the credit amount of the new transaction offer, the credit amount of any other transaction offers posted on the electronic bulletin board by the offering client and the credit amount of the balance of transactions of the offering client which have been agreed to but a credit transaction period of which has not yet expired.

5. The electronic transaction system as set forth in claim 1 wherein the server determines whether there is a transaction offer posted on the electronic bulletin board whose conditions are identical to those of a newly received transaction offer except for a price, and if there is, preferentially posts one of the transaction offers on the electronic bulletin board which is more advantageously priced for a trading partner.

6. The electronic transaction system as set forth in claim 5 wherein the server determines whether the transaction offer posted on the electronic bulletin board whose conditions are identical to those of a newly received transaction offer except for the price exists, and where there is, determines which transaction offer is more advantageously priced for the trading partner, and if the transaction offer already posted is more advantageously priced, refrains from posting the newly received transaction offer, and if the newly received transaction offer is more advantageously priced, replaces the transaction offer already posted with the newly received transaction offer as well as reports the client who placed the former offer that the transaction offer has been removed from the electronic bulletin board.

7. The electronic transaction system as set forth in claim 1 wherein the server is capable of posting transaction offers made by the server administrator on the electronic bulletin board.

8. The electronic transaction system as set forth in claim 1 wherein the server is managed by a bank.

9. The electronic transaction system as set forth in claim 1 wherein a product for the transaction is credit derivative.

10. An electronic transaction system comprising:

a server controlled by a host connected with a plurality of client computers through a network, the server having a receiving and storage means in the server for receiving a first offer from a first client, and an offer determination means for assurance of a credible first offer; and
a display means for exhibiting the credible first offer from said first client computers on an electronic bulletin board as an offer by the host to the plurality of client computers.

11. The electronic transaction system as set forth in claim 10 wherein the server further comprises an acceptance receiving means for receiving an acceptance of the offer by the host from at least one of the plurality of client computers and a second determination means for determining credibility of the acceptance, and execution means permitting completion of the transaction.

12. The electronic transaction system as set forth in claim 11 wherein the offer determination means is provided with a credit limit for the first client, compares the credit limit with a gross credit amount of the first client and determines that the first offer is credible when the gross credit amount is less than the credit limit.

13. The electronic transaction system as set forth in claim 12
wherein the offer determination means determines the gross credit amount of the first client as a sum of the credit amount of the offer, the credit amount of any unaccepted first client offers posted on the electronic bulletin board, and a credit amount of the balance of acceptances of remaining first client offers remaining within a predetermined credit transaction period.

14. The electronic transaction system as set forth in claim 13 wherein the server further comprises a third determination means for determining that the offer posted on the electronic bulletin board includes the same conditions as a second offer, except for price, and preferential posting means for exhibiting the more advantageous of one of the offer and the second offer for the plurality of client computers.

15. The electronic transaction system as set forth in claim 14 wherein the third determination means refrains from posting on the electronic bulletin board the second offer where the second offer is less advantageously priced then the first offer and, replaces the first offer on the electronic bulletin board with the second offer where the second offer is more advantageously priced than the first offer and informs the first client that the first offer has been removed from the bulletin board.

16. A method of facilitating a transaction using an electronic transaction system, the method comprising the steps of:

providing a server run by a host connected with a plurality of client computers through a network;
receiving and storing in the server a first offer from a first client;
assuring that the first offer is a credible first offer; and
exhibiting the credible first offer from said first client on an electronic bulletin board as an offer by the host to the plurality of client computers.

FIG. 1

FIG. 2

FIG. 3

HOME

TODAY'S PRICE
INDICATIONS

MY DEALS
ON BOARD

Welcome

FIG. 4

```
                    ┌─────────────┐
                    │   POSTING   │
                    │   ROUTINE   │
                    └──────┬──────┘
                           │
                    ┌──────┴──────┐
                    │  TRANSMIT   │  S200
                    │ BOARD INFO  │
                    └──────┬──────┘
                           │      S210
              NO      ╱────┴────╲
        ┌──────────── REQUEST FOR ╲
        │            ╲  DETAILS?  ╱
        │             ╲────┬────╱
        │              YES │
        │           ┌──────┴──────┐
        │           │  TRANSMIT   │  S220
        │           │   DETAILS   │
        │           └──────┬──────┘
        │                  │
        │             S230 ╱────┴────╲      NO
        │            ╱   ACCEPT?      ╲────────────┐
        │            ╲────┬────╱                   │
        │             YES │            S235 ╱──────┴──╲   NO
        │        S240     │            ╱   RETURN?    ╲──────┐
        │     NO     ╱────┴────╲       ╲──────┬──────╱       │
        │   ┌──────── WITHIN        ╲      YES │               │
        │   │       ╲ CREDIT LIMIT? ╱         │               │
        │   │        ╲────┬────╱              └───────────────┤
        │   │         YES │                                   │
        │   │  S250        │    S260                          │
        │ ┌─┴────────┐  ┌──┴─────────────────┐                │
        │ │ TRANSMIT │  │ NOTIFY BOTH CLIENTS │               │
        │ │ERROR MSG │  │ OF CONCLUSION       │               │
        │ └─┬────────┘  └──┬─────────────────┘                │
        │   │              │    S270                          │
        │   │        ┌─────┴──────────┐                       │
        │   │        │ UPDATE CLIENT  │                       │
        │   │        │ MANAGEMENT DB  │                       │
        │   │        └─────┬──────────┘                       │
        └───┴──────────────┤                                  │
                           │    S280                          │
                      ╱────┴────╲      NO                     │
                      ╲  QUIT?   ╱──────────────────────────┘
                      ╲────┬────╱
                       YES │
                    ┌──────┴──────┐
                    │     END     │
                    └─────────────┘
```

FIG. 5

TODAY'S PRICE INDICATIONS

HOME

TODAY'S PRICE INDICATIONS

MY DEALS ON BOARD

OUR PRICE INDICATIONS ON OCTOBER XX, 2000

| COMPANY | PRODUCT | POS. | AMOUNT (YEN) | PERIOD | PREMIUM | SELECT |
|---------|---------|------|--------------|--------|---------|--------|
| A | AAA | SELL | 1 BIL | 5 YRS | 30BP | ☐ |
| B | BBB | BUY | 1 BIL | 5 YRS | 30BP | ☐ |
| C | CCC | SELL | 1 BIL | 3 YRS | 5BP | ☐ |
| D | DDD | BUY | 2 BIL | 2 YRS | 15BP | ☐ |
| E | EEE | SELL | 0.5 BIL | 4 YRS | 20BP | ☐ |

DETAILS

EP 1 220 175 A2

FIG. 6

COMPANY A

| | |
|---|---|
| PRODUCT | A A A |
| POSITION | SELL |
| AMOUNT | 1 BILLION YEN |
| PERIOD | 5 YEARS |
| PREMIUM | 3.00% |
| PAYMENT | INSTALLMENTS |
| LIABILITIES | BOND OR LOAN |

BACK          ACCEPT

## FIG. 7

[CREDIT DERIVATIVE (DEFAULT SWAP)]

EP 1 220 175 A2

EP 1 220 175 A2

FIG. 8

CHECK ROUTINE

① 

TRANSMIT OFFERS PLACED BY CLIENT — S300

REQUEST? — S310
NO
YES

WHICH REQUEST? — S320
MODIFY / ADD / REMOVE

TRANSMIT MODIFICATION SCREEN — S340

TRANSMIT CONDITIONS INPUT SCREEN — S330

CONDITIONS RECEIVED? — S350
NO
YES

WITHIN CREDIT LIMIT? — S360
NO
YES

IDENTICAL OFFER? — S380
NO
YES

NEW OFFER ADVANTAGEOUS? — S390
NO
YES

NOTIFY CLIENT PLACED FORMER OFFER OF REMOVAL — S400

UPDATE DB — S440

NOTIFY CLIENT OF REMOVAL — S450

TRANSMIT ERROR MSG — S370

UPDATE DB — S420

NOTIFY CLIENT OF ENTRY — S430

TRANSMIT ERROR MSG — S410

QUIT? — S460
NO → ①
YES

END

17

FIG. 9

YOUR DEALS CURRENTLY POSTED

HOME

TODAY'S PRICE INDICATIONS

MY DEALS ON BOARD

YOUR TRANSACTION OFFERS CURRENTLY POSTED
ON BOARD ARE AS FOLLOWS

| SELECT | DATE | COMPANY | POS. | AMOUNT (YEN) | PERIOD | PREMIUM |
|---|---|---|---|---|---|---|
| ☐ | OCT. 20 | AAA | SELL | 1 BIL | 5 YRS | 30BP |
| ☐ | OCT. 20 | DDD | BUY | 2 BIL | 2 YRS | 15BP |
| ☐ | OCT. 20 | EEE | SELL | 0.5 BIL | 4 YRS | 20BP |

MODIFY    REMOVE    ADD

EP 1 220 175 A2

FIG. 10

<CONDITIONS INPUT FORM>

PLEASE FILL IN CONDITIONS OF TRANSACTION

COMPANY

PERIOD                      YEAR(S)

AMOUNT                      YEN

POSITION                    1. BUY  2. SELL

PREMIUM P.A.                BP

PAYMENT                     1. LUMP SUM   2. INSTALLMENTS